# EUROPÄISCHE PATENTSCHRIFT

(11) **EP 3 096 066 B1**
(45) Veröffentlichungstag und Bekanntmachung des Hinweises auf die Patenterteilung: **09.12.2020**
(21) Anmeldenummer: 16162011.7
(22) Anmeldetag: 23.03.2016
(51) Int. Cl.: F16P 3/14, A41D 19/015, B30B 15/28

(54) **MASCHINENBEDIENELEMENT MIT SICHERHEITSFUNKTIONALITÄT**
MACHINE CONTROL ELEMENT WITH SECURITY FUNCTIONALITY
ÉLEMENT DE COMMANDE DE MACHINE AYANT UNE FONCTIONNALITE DE SECURITE

(30) Priorität: 23.03.2015 AT 502302015
(43) Veröffentlichungstag der Anmeldung: 23.11.2016
(73) Patentinhaber: TRUMPF Maschinen Austria GmbH & Co. KG., 4061 Pasching (AT)
(72) Erfinder: DENKMEIER, Thomas, 4050 Traun (AT); MAYRHOFER, Johann, 4542 Nussbach (AT)
(74) Vertreter: Burger, Hannes

(56) Entgegenhaltungen:
- EP-A2- 1 445 531
- WO-A2-2011/144997
- AT-A1- 506 185
- DE-A1-102013 202 749
- US-A- 2013 289 760
- US-A1- 2006 250 256
- US-A1- 2014 215 684

## Beschreibung

Die Erfindung betrifft ein Maschinenbedienelement mit Sicherheitsfunktionalität.

Bei der Bedienung einer Maschine, insbesondere einer Werkzeugmaschine wie einer Biegepresse oder Schwenkbiegemaschine, ergeben sich für den Maschinenbediener mehrere Herausforderungen. Das zu bearbeitende Werkstück ist korrekt in Relation zu den Bearbeitungsmittel der Maschine auszurichten, die Bearbeitung ist zu starten und ggf. zu überwachen und alles unter Einhaltung der Eigensicherheit, so dass es während des Bearbeitungsschritts zu keiner Gefährdung des Bedieners kommt. Die Einstellhandlungen bzw. das Auslösen des Bearbeitungsschritts erfordern jedoch eine Konzentration auf das Werkstück und auf eine Maschinensteuerung, wodurch der Bediener gezwungen wird, seine Aufmerksamkeit alternierend aufzuteilen. Somit wird es Momente geben, wo die Aufmerksamkeit des Bedieners nicht auf dem Werkstück bzw. nicht auf den Bearbeitungsmittel der Werkzeugmaschine liegt.

Aus nicht näher ausgeführten Ursachen kann der Bearbeitungsschritt jedoch nicht wie vorgesehen ablaufen, sodass es zu einer unmittelbaren Gefährdung des Bedieners kommt.

Beispielsweise kann das zu bearbeitende Werkstück vom Bediener derart gehalten werden, dass nach Auslösen des Bearbeitungsvorgangs ein Körperteil, insbesondere eine Hand des Bedieners, im Arbeitsbereich eines Werkzeugs der Bearbeitungsmaschine befindet. Auch kann es vorkommen, dass sich während des Bearbeitungsvorgangs das Werkstück deformiert bzw. verformt und es somit zu einem Einklemmen eines Körperteils zwischen dem Werkstück und der Bearbeitungsmaschine kommen kann. Durch die Notwendigkeit Bedienhandlungen und Manipulationshandlungen im Wesentlichen parallel durchführen zu müssen, ergibt sich für den Bediener ein nicht unbeträchtlicher Stress der im Laufe eines Arbeitstags zu einer zusätzlichen Ermüdung und folglich auch zu einer erhöhten Gefahr von Unachtsamkeitsfehlern führt.

Aus dem Stand der Technik sind Vorrichtungen bekannt, mit denen sich erkennen lässt, ob sich ein Körperteil, insbesondere eine Hand eines Bedieners, im Arbeitsbereich eines Werkzeugs einer Werkzeugmaschine befindet und/oder bereits einen Teil der Werkzeugmaschine kontaktiert hat.

Die WO 2003/027565 offenbart, dass ein Bediener auf ein elektrisches Potential aufgeladen wird, welches Potential über dem elektrischen Potential der Maschine liegt. Der Potentialunterschied zwischen dem Bediener und der Maschine wird überwacht und ein Potentialabfall als Kontakt zwischen Bediener und Maschine interpretiert.

Aus der EP 1 445 531 ist ein Handschuh bekannt, bei dem auf der Rückseite ein leitfähiger Abschnitt angeordnet ist, welcher bei Kontakt mit der Maschine ein Signal aussendet, woraufhin die Bewegung des Werkzeugs gestoppt wird.

Aus der EP 1 086 334 ist ein Handschuh bekannt, welcher Handschuh Sensoren bzw. Schaltkreise aufweist, die ein Überwachungssignal aussenden, welches von einem ersten Detektor an der Werkzeugmaschine erfasst und dahingehend ausgewertet wird, ob sich der Sensor bzw. der Schaltkreis im Pfad des bewegenden Werkzeuges befindet.

Aus der DE 60 2004 011 967 ist ein Identifikationselement bekannt, welches von einem Sensor auf einer Werkzeugmaschine erfasst werden kann. Wenn eine Anwesenheit des Identifikationselements erkannt wird, wird die Maschinenbedienung frei gegeben und die Bearbeitung kann starten.

Aus der JP 01271012 ist ein Handschuh bekannt, welcher mit einem reflektierenden Überzug versehen ist, der eine eingestrahlte, elektromagnetische Welle in Richtung eines Detektors reflektiert.

Die US 2006 025 02 56 offenbar eine Schlafalarmvorrichtung, bei der ein bis drei Drucksensoren an den Fingern einer Hand eines Bedieners angeordnet sind.

Auch die US 2002 012 94 37 offenbart einen Handschuh mit einem Drucksensor, welcher aktiviert wird, wenn eine vordefinierte Auslösekraft auf den Sensor einwirkt.

Aus der US 2007 012 06 82 ist ein RFID-Identifikationsvorrichtung bekannt, mit welche eine, mittels eines RFID-Tags gekennzeichnetes Objekt identifiziert und ferner die Position in Bezug zu einem Körper bzw. einer Vorrichtung erkannt werden kann.

Die DE 10 10 35 31 offenbart einen Handschuh mit einer im Material des Handschuhs angeordneten Antenne, wobei eine Lesevorrichtung mit der Antenne verbunden ist. Es ist ferner offenbart, dass ein Druckknopf vorhanden ist, mit dem ein Identifikationsvorgang ausgelöst werden kann.

Aus der WO 2005/056207 ist eine Sicherungsvorrichtung bekannt, bei der Licht entlang des Pfads eines bewegenden Werkzeugs ausgesandt wird und eine Unterbrechung des Lichts als Anwesenheit eines Objekts im Gefahrenbereich interpretiert wird.

Die JP 2005/095945 offenbart eine Druckerfassungsvorrichtung und Pulsratenermittlungsvorrichtung, um nach Auswertung der erfassten Daten eine Bedingung für die Bewegung eines Werkzeugs abzuleiten.

Aus der WO 2012/079109 ist ein Fußpedal bekannt, mit dem nach Auswertung der Betätigungskraft, die Geschwindigkeit eines Werkzeugs der zu steuernden Maschine abgeleitet werden kann.

Die US 2013 289760 A offenbart eine Maschinensteuerung, die es einem Bediener ermöglicht, Steuerfunktionen einzuleiten, ohne seine Bewegungsfreiheit in der Nähe einer Werkzeugmaschine einzuschränken.

Aus dem Stand der Technik sind Vorrichtungen bekannt, die sich im Wesentlichen auf die Erkennung eines sicherheitskritischen Zustandes beschränken. Insbesondere offenbaren die Schriften Vorrichtungen, welche ein Einklemmen eines Körperteils, insbesondere der Hand eines Bedieners, zwischen dem Werkstück und einem Bearbeitungswerkzeug bzw. zwischen dem Werkstück und einem Teil der Werkzeugmaschine erkennen und daraufhin ein Signal generieren, um den laufenden Bearbeitungsschritt umgehend zu beenden. Mit den bekannten Vorrichtungen besteht jedoch stets noch die Notwendigkeit für den Bediener zur Durchführung von Bedienhandlungen seine Aufmerksamkeit vom Werkstück bzw. vom Arbeitsbereich weg zu lenken, um die Bedienhandlung durchzuführen.

Der Nachteil des Standes der Technik liegt nun darin, dass kein integratives Konzept für die Bedienung der Werkzeugmaschine bei gleichzeitiger Bereitstellung und Gewährleistung einer Personensicherheit für den Bediener gegeben ist.

Die Aufgabe der Erfindung liegt nun darin eine Vorrichtung schaffen, mit der der Bediener einerseits Bedienhandlungen zur Durchführung des Arbeitsschrittes vornehmen kann und gleichzeitig eine Sicherheitsfunktionalität gegeben ist, um bei einem nicht planmäßig verlaufenden Arbeitsschritt die Sicherheit des Bedieners gewährleisten zu können.

Die Aufgabe der Erfindung wird gelöst durch ein Maschinenbedienelement mit Sicherheitsfunktionalität. Dieses umfasst ein Sicherheitskenngrößen-Erfassungsmittel auf einer Tragstruktur, welche Tragstruktur in oder an einem Bekleidungsstück angeordnet ist. Ferner ist das Bekleidungsstück an einem Maschinenbedienhandlungen durchführenden Körperteil anordenbar. Zwischen dem Sicherheitskenngrößen-Erfassungsmittel und einer Sicherheits-Schaltung einer zu bedienenden Werkzeugmaschine, besteht eine erste Kommunikationsverbindung. Das Bekleidungsstück ist ein Handschuh, und das Sicherheitskenngrößen-Erfassungsmittel weist einen hydraulischen Druckgeber und einen damit verbundenen hydraulischer Drucksensor auf. Ferner ist auf der Tragstruktur ein Stellgrößen-Erfassungsmittel angeordnet, wobei zwischen dem Stellgrößen-Erfassungsmittel und einem Steuerungsmodul der Werkzeugmaschine, eine zweite Kommunikationsverbindung besteht, welche zweite Kommunikationsverbindung von der ersten Kommunikationsverbindung getrennt ist.

Unter einem Sicherheitskenngrößen-Erfassungsmittel wird hierin eine Vorrichtung bzw. ein Element verstanden, welches eine direkte Gefährdung des Bedieners, insbesondere eines Körperteils desselben, erkennbar machen kann. Eine Gefährdung besteht immer dann, wenn es aus nicht weiter ausgeführten Gründen zu einem Kontakt des Bearbeitungsmittels, bzw. eines der Bearbeitungsmittel, mit dem Bediener, insbesondere einem Körperteil kommt. Oder wenn durch den Bearbeitungsvorgang der Körperteil zwischen Werkstück und Werkzeugmaschine eigeklemmt wird. In diesem Fall ist ein unmittelbarer Stopp des Bearbeitungsschritts erforderlich, um eine Verletzung des Bedieners zu verhindern. Diesbezüglich ist daher auch vorgesehen, dass das Sicherheitskenngrößen-Erfassungsmittel über eine erste Kommunikationsverbindung mit einer Sicherheits-Schaltung der Werkzeugmaschine verbunden ist, um unabhängig von ggf. zu übertragender Stellgrößen-Information, eine erkannte Gefährdung unmittelbar und sofort übermitteln zu können. Stellgrößen-Information wird nach der gegenständlichen Ausführung über eine zweite Kommunikationsverbindung zum Steuerungsmodul der Werkzeugmaschine übertragen.

Ein hydraulischer Druckgeber ist dazu ausgebildet, eine einwirkende Kraft in einen hydraulischen Druck umzuwandeln. Die Verwendung eines Fluids hat dabei den besonderen Vorteil, dass aufgrund der weitest gehenden Inkompressibilität einer Flüssigkeit, eine Krafteinwirkung und der damit verbundene Druckstoß bzw. Druckanstieg, sehr schnell vom Druckgeber zum hydraulischer Drucksensor übertragen bzw. geleitet wird. Wie einen Fachmann bekannt ist, kann durch die Wahl der Größenverhältnisse der im hydraulischen System vorhandenen Wirkflächen, eine Signalverstärkung erreicht werden (hydraulisches Übersetzungsverhältnis).

Bevorzugt werden die erste und zweite Kommunikationsverbindung drahtlos ausgebildet sein, insbesondere als Nahbereichskommunikations-Verbindung.

Nach einer Weiterbildung ist vorgesehen, dass der Druckgeber als Hydraulikkreis ausgebildet ist. Dies hat den Vorteil, dass damit eine größere Erfassungsfläche gebildet werden kann, ohne das Flüssigkeitsvolumen stark vergrößern zu müssen. Wie bereits beschrieben, kann über das hydraulische Übersetzungsverhältnis mit einer geringen zu verdrängenden bzw. zu bewegenden Flüssigkeitsmenge, eine sicherheitskritische Kontaktierung der Hand des Bedieners eindeutig erkannt werden. Auch ist es dadurch möglich, den hydraulischen Druckgeber und den hydraulischer Drucksensor voneinander distanziert anzuordnen, um so eine bessere Platzausnutzung auf der Tragstruktur zu erreichen und/oder die Bewegungsfreiheit bei der Bedienung der Werkzeugmaschine zu verbessern.

Eine Weiterbildung besteht auch darin, dass im Hydraulikkreis ein Fördermittel vorhanden ist. Bei einer passiven Erkennung einer Druckschwankung kann ggf. wertvolle Zeit verstreichen, bis ein sicherheitskritischer Zustand eindeutig erkannt wird. Befindet sich das Fluid im Hydraulikkreis in Bewegung, führt eine Kontaktierung des hydraulischen Druckgebers durch ein Bearbeitungswerkzeug und/oder durch ein sich bewegendes Werkstück, zu einem raschen Druckanstieg. Ein rascher Druckanstieg im Hydraulikkreis ermöglicht unmittelbar eine frühere zuverlässige Erkennung eines sicherheitskritischen Zustands, was insbesondere bei Werkzeugmaschinen mit schnell bewegten Bearbeitungsmittel von Vorteil ist.

Nach einer Weiterbildung ist ferner vorgesehen, dass der hydraulische Druckgeber als hydraulische Stichleitung ausgebildet ist, bspw. als einseitig geschlossener Schlauch.

Eine Weiterbildung besteht ferner darin, dass der hydraulische Druckgeber im Bereich der Oberseite des Handschuhs angeordnet ist. Bei der Maschinenbedienung und insbesondere bei der Manipulation des Werkstücks wird die Oberseite zumeist in Richtung des oder der Bearbeitungsmittel ausgerichtet sein. Im Fall, dass das Werkstück bei der Bearbeitung zu führen ist, wird ebenfalls die Handhaltung des Bedieners so sein, dass sich die Oberseite des Handschuhs auf das Bearbeitungswerkzeug und/oder die Werkzeugmaschine zubewegt. Somit werden die Oberseite des Handschuhs und damit der hydraulische Druckgeber zumeist die ersten Elemente sein, bei denen es zu einer Klemmung kommt.

Eine Weiterbildung besteht auch darin, dass das Sicherheitskenngrößen-Erfassungsmittel im Bereich zumindest eines Fingers angeordnet ist. Gerade bei Manipulationsarbeiten beim Einlegen und/oder Ausrichten des Werkstückes sind die Finger des Bedieners besonders gefährdet. Daher ist es von Vorteil, wenn das Sicherheitskenngrößen-Erfassungsmittel in diesem Bereich angeordnet ist, da somit frühzeitig eine Gefahrensituation erkannt und entschärft werden kann.

Eine Weiterbildung, nach der der Druckgeber auch das Stellgrößen-Erfassungsmittel bildet, hat den Vorteil, dass dadurch eine besonders kompakte Einheit geschaffen werden kann. Die Einheit umfasst dann einerseits die Mittel zur Erfassung von Stellgrößen zur Bedienung der Maschine, und andererseits Erfassungsmittel, um einen sicherheitskritischen Zustand erkennen zu können.

Nach einer Weiterbildung ist auch vorgesehen, dass die Tragstruktur als Überziehteil ausgebildet ist. Diese Weiterbildung ermöglicht eine Trennung der Erfassungsmittel, von der Schutzfunktion des Handschuhs. Somit kann bspw. die Tragstruktur zuerst übergezogen werden und danach der Handschuh, oder umgekehrt. Da ein Handschuh ein Verschleißteil ist, lässt sich mit dieser Weiterbildung eine Steigerung der Wirtschaftlichkeit erreichen, indem der Handschuh nach Gebrauch bzw. bei Verschleiß getauscht werden kann, ohne die Bedien- bzw. Sicherheitseinrichtung tauschen zu müssen.

Eine Weiterbildung besteht auch darin, dass auf der Tragstruktur eine Auswerteelektronik angeordnet ist, welche zur Umwandlung der erfassten Sicherheitskenngrößen und/oder der erfassten Stellgrößen ausgebildet ist. Dies hat den Vorteil, dass die sicherheitsrelevanten Signale bereits auf der Tragstruktur umgewandelt und ggf. ausgewertet werden können. Diese Auswerteelektronik kann bspw. auch einen Transmitter umfassen, sodass zur Sicherheits-Schaltung und/oder zum Steuerungsmodul ein aufbereitetes Signal übermittelt werden kann. Dies hat den Vorteil, dass die erfassten und zumeist recht schwachen Signale bereits aufbereitet und verstärkt weitergeleitet werden können und somit einem geringeren Störeinfluss durch Signale im Umfeld unterliegen.

Eine Weiterbildung besteht auch darin, dass die Auswerteelektronik einen Schwellwertschalter aufweist. Bei der Maschinenbedienung bzw. bei Manipulationshandlungen am bzw. mit dem Werkstück kommt es zwangsläufig zu Bewegungen der Hand und der Finger, ohne dass diese Bewegungen jedoch als Stellgröße und/oder als sicherheitsrelevantes Signal zu interpretieren wären. Mit einem Schwellwertschalter lässt sich festlegen, welche Größe bzw. Intensität ein erfasstes Signal haben muss, um gegenüber einer Alltagshandlung als relevantes Signal erfasst werden zu müssen. Der Schwellwertschalter kann bspw. als mechanisch vorgespannter Druckschalter, oder als elektronischer Komparator, oder softwaretechnisch als Werte-Vergleich ausgeführt sein.

Von Vorteil ist ferner eine Weiterbildung, nach der die Auswerteelektronik als gedruckte elektronische Schaltung ausgebildet ist. Dadurch lässt sich die Auswerteschaltung nach Herstellung der Tragstruktur, einfach auf dieser anordnen. Gedruckte Schaltungen haben den weiteren Vorteil, dass sie für den Einsatz auf flexiblen Unterlagen besonders geeignet sind. Die Tragstruktur wird an einem Körperteil, insbesondere der Hand angeordnet, wobei es durch Alltagsbewegungen und Werkstück-Manipulations- bzw. Maschinen-Bedienhandlungen, zu Formänderungen kommen wird. Eine anspruchsgemäß ausgebildet Schaltung ist besonders geeignet, diese Bewegungen ohne Beschädigung zu überstehen, und gleichzeitig die Bewegungsfreiheit des Bedieners nicht allzu sehr einzuschränken.

Eine Weiterbildung besteht auch darin, dass das Sicherheitskenngrößen-Erfassungsmittel einen Schwellwertschalter aufweist. Wie bereits zuvor für die Auswerteelektronik beschrieben, darf eine Alltagshandlung die Sicherheits-Schaltung der zu bedienenden Werkzeugmaschine nicht aktivieren. Mittels eines bevorzugt einstellbaren Schwellwertschalters lässt sich die Intensität der, ein Ansprechen des Schwellwertschalters auslösenden Reiz einstellen.

Da die Erfassung von Stellgrößen und/oder von sicherheitsrelevanten Signalen u.U. elektrische Energie benötigt, ist gemäß einer Weiterbildung vorgesehen, dass auf der Tragstruktur ein elektrischer Energiespeicher, oder ein Anschluss für einen elektrischen Energiespeicher angeordnet ist. Ein lokaler elektrischer Energiespeicher ist bevorzugt wieder aufladbar ausgebildet. Über einen Anschluss können das Stellgrößen-Erfassungsmittel, das Sicherheitskenngrößen-Erfassungsmittel und/oder die Auswerteschaltung, mit einem externen elektrischen Energiespeicher verbunden werden. Der Bediener kann einen solchen Energiespeicher bspw. an einem Werkzeuggürtel tragen.

Eine Weiterbildung kennzeichnet sich auch dadurch, dass die erste und zweite Kommunikationsverbindung über ein gemeinsames Kommunikationsmedium aufgebaut sind. Beispielsweise kann als Kommunikationsmedium eine Nahbereichs-Funkverbindung wie WLAN, Bluetooth, ZigBee oder Ähnliches eingesetzt werden, wobei die Aufzählung nicht abschließend zu sehen ist. Auf einem gemeinsamen Kommunikationsmedium kann auch eine Priorisierung realisiert werden, in dem ein Signal des Sicherheitskenngrößen-Erfassungsmittels vor einer Übertragung des Stellgrößen-Erfassungsmittel den Vorzug erhält, was für eine mögliche rasche Reaktion auf einen erkannten, möglicher Weise sicherheitskritischen Zustand von Vorteil ist.

Von Vorteil ist auch, wenn gemäß einer Weiterbildung die zweite Kommunikationsverbindung zur Energieübertragung zum Stellgrößen-Erfassungsmittel ausgebildet ist. Dies ermöglicht, dass eine Übertragung von Stellsignalen und gleichzeitig eine Übertragung von elektrischer Energie über eine gemeinsame Kommunikationsverbindung möglich ist.

Zum besseren Verständnis der Erfindung wird diese anhand der nachfolgenden Figuren näher erläutert.

Es zeigen jeweils in stark vereinfachter, schematischer Darstellung:
- Fig. 1: eine mögliche Ausführungsvariante des gegenständlichen Maschinenbedienelements mit einem hydraulischen Druckgeber;
- Fig. 2: eine mögliche Ausführungsvariante des gegenständlichen Maschinenbedienelements mit einer weiteren Ausführungsform des Hydraulikkreises als Druckgeber.

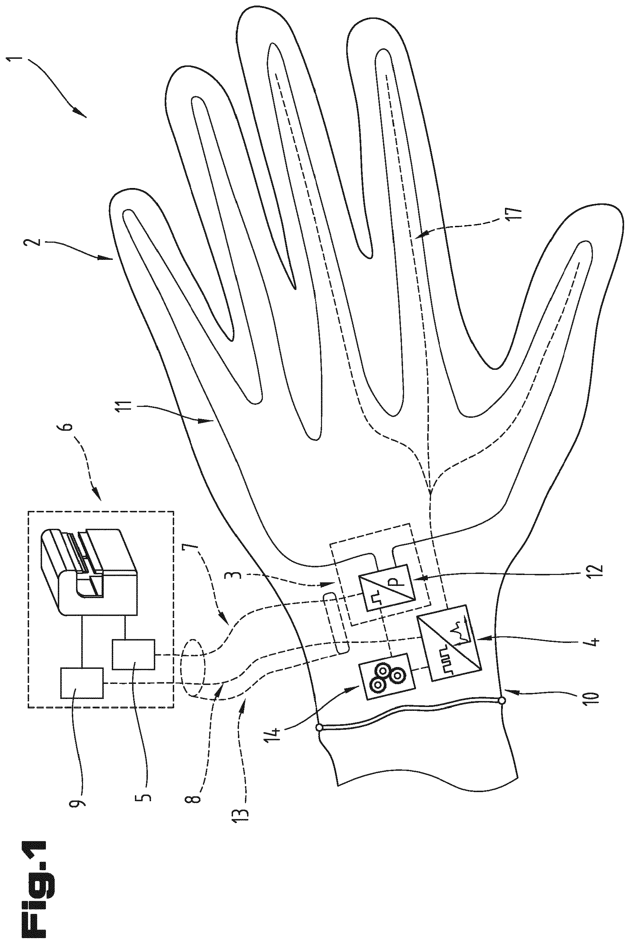

Fig. 1 zeigt eine Ausführung des gegenständlichen Maschinenbedienelements 1 mit einer Sicherheitsfunktionalität. Auf einer Tragstruktur 2 ist ein Sicherheitskenngrößen-Erfassungsmittel 3 angeordnet. Ferner ist auf der Tragstruktur 2 ein Stellgrößen-Erfassungsmittel 4 angeordnet. Das Sicherheitskenngrößen-Erfassungsmittel 3 ist über eine erste Kommunikationsverbindung 7 mit einer Sicherheits-Schaltung 5, einer zu bedienenden Werkzeugmaschine 6 verbunden. Das Stellgrößen-Erfassungsmittel 4 ist über eine zweite Kommunikationsverbindung 8 mit einem Steuerungsmodul 9 der Werkzeugmaschine 6 verbunden.

Die Tragstruktur 2 ist in oder an einem Bekleidungsstück anordenbar, wobei gemäß einer bevorzugten Ausführung das Bekleidungsstück ein Handschuh 10 ist.

Das Sicherheitskenngrößen-Erfassungsmittel 3 weist einen hydraulischen Druckgeber 11 und einen damit verbundenen hydraulischen Drucksensor 12 auf. In der Fig. 1 ist der hydraulische Druckgeber 11 als Hydraulikkreis ausgebildet, wobei gemäß einer weiteren möglichen Ausführung, der hydraulische Druckgeber auch als hydraulische Stichleitung ausgebildet sein kann. In der dargestellten Ausführung ist der Hydraulikkreis als mit einem Hydraulikfluid gefüllte Schlauchleitung ausgebildet, welche mit ihrem ersten Ende am hydraulischen Drucksensor 12 beginnt, entlang der Finger der Tragstruktur 2 fortsetzt und mit ihrem zweiten Ende wiederum am hydraulischen Drucksensor 12 endet. Bevorzugt wird der hydraulische Druckgeber 11 bzw. die Tragstruktur 2 derart angeordnet sein, dass sie beim übergezogenen Handschuh an der Oberseite der Hand angeordnet ist und somit auch in Richtung des Bearbeitungswerkzeugs der Werkzeugmaschine ausgerichtet ist.

In der Figur ist dargestellt, dass das Sicherheitskenngrößen-Erfassungsmittel 3 über eine erste Kommunikationsverbindung 7 und das Stellgrößen-Erfassungsmittel 4 über eine zweite Kommunikationsverbindung 8 mit den jeweiligen Gegenstellen der Werkzeugmaschine 6 verbunden sind. Gemäß einer Weiterbildung kann auch vorgesehen sein, dass die erste 7 und zweite 8 Kommunikationsverbindung über ein gemeinsames Kommunikationsmedium 13 aufgebaut sind. Dies kann beispielsweise ein gemeinsamer Funkkanal sein, wobei jedoch sichergestellt ist, dass die erste Kommunikationsverbindung 7, welche sicherheitsrelevante Signale überträgt, gegenüber den über die zweite Kommunikationsverbindung 8 übermittelten Stellgrößen bevorrangt wird. Durch die Verwendung zweier getrennter Kommunikationsverbindungen, ggf. jedoch über ein gemeinsames Kommunikationsmedium 13, kann gewährleistet werden, dass sicherheitsrelevante Signale unmittelbar zur Sicherheits-Schaltung 5 der Werkzeugmaschine 6 übertragen werden, um dort einen sofortigen Bearbeitungsstopp auszulösen. Dies ist insbesondere von Bedeutung, da es beim Ansprechen des Sicherheitskenngrößen-Erfassungsmittels 3 zu einem wie auch immer gearteten Kontakt zwischen einem Bearbeitungswerkzeug der Werkzeugmaschine und/oder dem sich umformenden Werkstück und der Hand des Bedieners gekommen ist. In diesem Fall muss der gerade ablaufende Bearbeitungsschritt umgehend gestoppt bzw. gegebenenfalls umgekehrt werden, um eine Verletzung bzw. weitere Gefährdung des Bedieners zu verhindern.

In einer Weiterbildung ist ferner möglich, dass auf der Tragstruktur 2 eine Auswerteelektronik 14 angeordnet sein kann, welche die erfassten Sicherheitskenngrößen und/oder erfasste Stellgrößen aufbereiten bzw. bearbeiten kann. Durch die Bewegung der Hand des Bedieners werden sowohl das Sicherheitskenngrößen-Erfassungsmittel 3 als auch das Stellgrößen-Erfassungsmittel 4 kontinuierlich Sensordaten erfassen. Um sicherstellen zu können, dass Alltagsbewegungen bzw. Standard-Bedien- bzw. Manipulationshandlungen nicht permanent einen Fehlalarm und/oder Fehlbedienung auslösen, kann die Auswerteelektronik 14 ein Signalprofil bzw. ein Schwellwertprofil aus den erfassten Sensordaten gebildet bzw. abgeleitet werden. Somit wird erst eine spezifische Bewegung als Stellgröße bzw. eine starke Änderung von erfassten Sensordaten des Sicherheitskenngrößen-Erfassungsmittels 3 als sicherheitskritischer Zustand erfasst. Bleiben die Sensordaten hinter einem hinterlegten Schwellwertprofil zurück, wird dies als Alltagsbewegung interpretiert und führt somit nicht zu einem Bedienkommando bzw. zu einem sicherheitskritischen Signal.

Das Stellgrößen-Erfassungsmittel 4 ist bevorzugt mit einem Stellgrößen-Sensor 17 verbunden, wobei der Stellgrößen-Sensor 17 auf der Tragstruktur derart angeordnet ist, dass zumindest die wichtigsten, bei der Bedienhandlung verwendeten Finger vom Sensor erfasst werden. Nicht abschließend kann der Stellgrößen-Sensor 17 bspw. als Dehnmessstreifen oder als piezo-resistives Element ausgebildet sein, jedenfalls führt eine Deformation bzw. Biegung des Stellgrößen-Sensors 17 zu einer Veränderung seiner elektrischen Eigenschaften oder zur Abgabe eines elektrischen Signals, was vom Stellgrößen-Erfassungsmittel 4 ausgewertet wird. Aus diesen ausgewerteten Sensordaten kann über die Kenntnis der elektrischen Eigenschaften bzw. Kenngrößen auf die verursachende Bewegung zurückgeschlossen werden und somit ein Bewegungsprofil erstellt werden, welche sich als Steuerkommando interpretieren lässt.

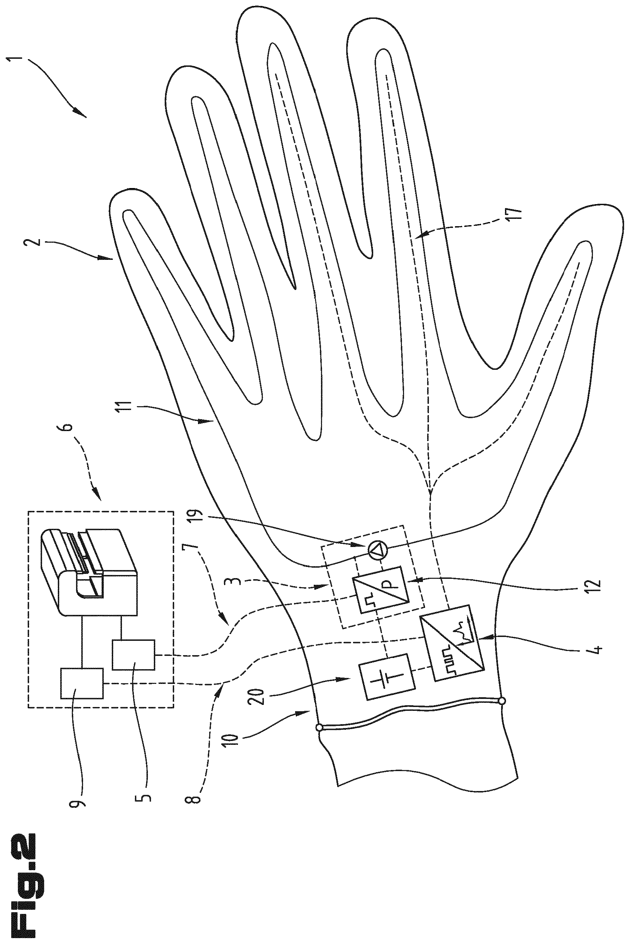

Fig. 2 zeigt eine weitere mögliche Ausführung des gegenständlichen Maschinenbedienelements 1 mit einem Sicherheitskenngrößen-Erfassungsmittel 3 und einem Stellgrößen-Erfassungsmittel 4 auf einer gemeinsamen Tragstruktur 2, welche Tragstruktur 2 als Handschuh 10 ausgebildet ist.

In der dargestellten Ausführung ist der Druckgeber 11 als Hydraulikkreis ausgebildet, wobei im Hydraulikkreis ein Fördermittel 19 angeordnet ist. Das Sicherheitskenngrößen-Erfassungsmittel 3 ist druckseitig mit dem Fördermittel 19 bzw. dem Hydraulikkreis verbunden. Das Fördermittel 19 gewährleistet, dass das Hydraulikfluid im Hydraulikkreis kontinuierlich zirkuliert. Somit führt bereits eine geringe Veränderung des Strömungsdurchmessers im Hydraulikkreis, beispielsweise aufgrund eines Kontakts der Hand mit einem Bearbeitungswerkzeug, zu einem sehr raschen Druckanstieg im Hydraulikkreis. Ein solcher Durchanstieg kann vom Sicherheitskenngrößen-Erfassungsmittel 3 frühzeitig erfasst bzw. ausgewertet werden.

Zur Versorgung des Sicherheitskenngrößen-Erfassungsmittels 3 und des Stellgrößen-Erfassungsmittels 4 gemäß der dargestellten Ausführungsformen, kann ferner vorgesehen sein, dass auf der Tragstruktur 2 ein elektrischer Energiespeicher 20 angeordnet ist, welcher bevorzugt durch einen wieder aufladbaren Akkumulator gebildet ist. Es kann jedoch auch vorgesehen sein, dass der elektrische Energiespeicher 20 über die erste 7 und/oder zweite 8 Kommunikationsverbindung bzw. das gemeinsame Kommunikationsmedium 13 kontinuierlich mit elektrischer Energie versorgt und somit geladen wird. Es ist in einer Weiterbildung auch möglich, dass die Kommunikationsverbindungen bzw. das Kommunikationsmedium in der Lage sind, das Sicherheitskenngrößen-Erfassungsmittel 3 und das Stellgrößen-Erfassungsmittel 4, direkt ohne Zuhilfenahme eines Energiespeichers 20 mit elektrischer Energie versorgen.

Der Vorteil des gegenständlichen Maschinenbedienelements liegt nun insbesondere darin, dass gleichzeitig eine Abgabe von Stellgrößen zur Bedienung der Werkzeugmaschine und eine Erfassung eines sicherheitsrelevanten Signals möglich ist. Insbesondere ist mit dem gegenständlichen Maschinenbedienelement gewährleistet, dass der Bediener seine volle Aufmerksamkeit auf den Bearbeitungsbereich gerichtet lassen kann und dabei Maschinenbedienhandlungen bzw. Maschinenbedienkommandos auslösen kann. Gleichzeitig ist gewährleistet, dass im Fall einer Unachtsamkeit bzw. eines ungewünscht verlaufenden Bearbeitungsschrittes, eine Verletzung des Bedieners bzw. eines Körperteils des Bedieners vermieden wird, indem ein sicherheitsrelevanter Zustand erkannt wird und der Bearbeitungsschritt unmittelbar nach Erkennung beendet wird.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

In der Fig. 2 ist eine weitere und gegebenenfalls für sich eigenständige Ausführungsform des Maschinenbedienelements gezeigt, wobei wiederum für gleiche Teile gleiche Bezugszeichen bzw. Bauteilbezeichnungen wie in den vorangegangenen Figuren verwendet werden. Um unnötige Wiederholungen zu vermeiden, wird auf die detaillierte Beschreibung in den vorangegangenen Figuren hingewiesen bzw. Bezug genommen.

Die Ausführungsbeispiele zeigen mögliche Ausführungsvarianten des Maschinenbedienelements, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Des Weiteren können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Fig. 1-2 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus des Maschinenbedienelements diese bzw. deren Bestandteile teilweise unmaßstäblich und/oder vergrößert und/oder verkleinert dargestellt wurden.

### Bezugszeichenaufstellung

- 1: Maschinenbedienelement
- 2: Tragstruktur
- 3: Sicherheitskenngrößen-Erfassungsmittel
- 4: Stellgrößen-Erfassungsmittel
- 5: Sicherheits-Schaltung
- 6: Werkzeugmaschine
- 7: erste Kommunikationsverbindung
- 8: zweite Kommunikationsverbindung
- 9: Steuerungsmodul
- 10: Handschuh
- 11: Druckgeber
- 12: Drucksensor
- 13: gemeinsames Kommunikationsmedium
- 14: Auswerteelektronik

- 17: Stellgrößen-Sensor

- 19: Fördermittel
- 20: Energiespeicher

## Patentansprüche

1. Maschinenbedienelement (1) mit Sicherheitsfunktionalität
umfassend
ein Sicherheitskenngrößen-Erfassungsmittel (3) auf einer Tragstruktur (2),
wobei die Tragstruktur (2) in oder an einem Bekleidungsstück angeordnet ist, welches Bekleidungsstück an einem Maschinenbedienhandlungen durchführenden Körperteil anordenbar ist, und wobei das Bekleidungsstück ein Handschuh (10) ist, und
wobei zwischen dem Sicherheitskenngrößen-Erfassungsmittel (3) und einer Sicherheits-Schaltung (5) einer zu bedienenden Werkzeugmaschine (6), eine erste Kommunikationsverbindung (7) besteht,
**dadurch gekennzeichnet, dass**
das Sicherheitskenngrößen-Erfassungsmittel (3) einen hydraulischen Druckgeber (11) und einen damit verbundenen hydraulischer Drucksensor (12) aufweist, und
dass auf der Tragstruktur (2) ferner ein Stellgrößen-Erfassungsmittel (4) angeordnet ist, wobei zwischen dem Stellgrößen-Erfassungsmittel (4) und einem Steuerungsmodul (9) der Werkzeugmaschine (6), eine zweite Kommunikationsverbindung (8) besteht, welche zweite Kommunikationsverbindung (8) von der ersten Kommunikationsverbindung (7) getrennt ist.

2. Maschinenbedienelement nach Anspruch 1, **dadurch gekennzeichnet, dass** der hydraulische Druckgeber (11) als Hydraulikkreis ausgebildet ist.

3. Maschinenbedienelement nach Anspruch 2, **dadurch gekennzeichnet, dass** im Hydraulikkreis ein Fördermittel (19) vorhanden ist.

4. Maschinenbedienelement nach Anspruch 1, **dadurch gekennzeichnet, dass** der hydraulische Druckgeber (11) als hydraulische Stichleitung ausgebildet ist.

5. Maschinenbedienelement nach Anspruch 1, oder Anspruch 4, **dadurch gekennzeichnet, dass** der Druckgeber (11) im Bereich der Oberseite des Handschuhs (10) angeordnet ist.

6. Maschinenbedienelement nach Anspruch 5, **dadurch gekennzeichnet, dass** das Sicherheitskenngrößen-Erfassungsmittel (3) im Bereich zumindest eines Fingers angeordnet ist.

7. Maschinenbedienelement nach einem der Ansprüche 1 bis 6, **dadurch gekennzeichnet, dass** der hydraulische Druckgeber (11) auch das Stellgrößen-Erfassungsmittel (4) bildet.

8. Maschinenbedienelement nach einem der Ansprüche 1 bis 7, **dadurch gekennzeichnet, dass** die Tragstruktur (2) als Überziehteil ausgebildet ist.

9. Maschinenbedienelement nach einem der Ansprüche 1 bis 8, **dadurch gekennzeichnet, dass** auf der Tragstruktur (2) eine Auswerteelektronik (14) angeordnet ist, welche zur Umwandlung der erfassten Sicherheitskenngrößen und/oder der erfassten Stellgrößen ausgebildet ist.

10. Maschinenbedienelement nach Anspruch 9, **dadurch gekennzeichnet, dass** die Auswerteelektronik (14) einen Schwellwertschalter aufweist.

11. Maschinenbedienelement nach Anspruch 9 oder 10, **dadurch gekennzeichnet, dass** die Auswerteelektronik (14) als gedruckte elektronische Schaltung ausgebildet ist.

12. Maschinenbedienelement nach einem der Ansprüche 1 bis 11, **dadurch gekennzeichnet, dass** das Sicherheitskenngrößen-Erfassungsmittel (3) einen Schwellwertschalter aufweist.

13. Maschinenbedienelement nach einem der Ansprüche 1 bis 12, **dadurch gekennzeichnet, dass** auf der Tragstruktur (2) einen elektrischer Energiespeicher, oder ein Anschluss für einen elektrischen Energiespeicher angeordnet ist.

14. Maschinenbedienelement nach einem der Ansprüche 1 bis 13, **dadurch gekennzeichnet, dass** die erste und zweite Kommunikationsverbindung (8) über ein gemeinsames Kommunikationsmedium (13) aufgebaut sind.

15. Maschinenbedienelement nach einem der Ansprüche 1 bis 14, **dadurch gekennzeichnet, dass** die zweite Kommunikationsverbindung (8) zur Energieübertragung zum Stellgrößen-Erfassungsmittel (4) ausgebildet ist.

## Claims

1. A machine operating element (1) with safety functionality
comprising
a safety parameter detection means (3) on a support structure (2),
wherein the support structure (2) is arranged in or on an article of clothing, which article of clothing can be arranged on a body part performing machine operating actions, and wherein the article of clothing is a glove (10), and
wherein a first communication connection (7) is established between the safety parameter detection means (3) and a safety circuit (5) of a machine tool (6) to be operated, **characterized in that**
the safety parameter detection means (3) has a hydraulic pressure transmitter (11) and a hydraulic pressure sensor (12) connected thereto, and
**in that**, further, a control variable detection means (4) is arranged on the support structure (2),
wherein a second communication connection (8) is established between the control variable detection means (4) and a control module (9) of the machine tool (6), which second communication connection (8) is separate from the first communication connection (7).

2. The machine operating element according to claim 1, **characterized in that** the hydraulic pressure transmitter (11) is formed as a hydraulic circuit.

3. The machine operating element according to claim 2, **characterized in that** a conveying means (19) is present in the hydraulic circuit.

4. The machine operating element according to claim 1, **characterized in that** the hydraulic pressure transmitter (11) is formed as a hydraulic stub.

5. The machine operating element according to claim 1 or claim 4, **characterized in that** the pressure transmitter (11) is arranged in the region of the upper side of the glove (10).

6. The machine operating element according to claim 5, **characterized in that** the safety parameter detection means (3) is arranged in the region of at least one finger.

7. The machine operating element according to one of claims 1 to 6, **characterized in that** the hydraulic pressure transmitter (11) also forms the control variable detection means (4).

8. The machine operating element according to one of claims 1 to 7, **characterized in that** the support structure (2) is formed as an outer wear part.

9. The machine operating element according to one of claims 1 to 8, **characterized in that** an evaluation electronics (14) is arranged on the support structure (2), which is configured for converting the detected safety parameters and/or the detected control variables.

10. The machine operating element according to claim 9, **characterized in that** the evaluation electronics (14) has a threshold switch.

11. The machine operating element according to claim 9 or 10, **characterized in that** the evaluation electronics (14) is formed as a printed electronic circuit.

12. The machine operating element according to one of claims 1 to 11, **characterized in that** the safety parameter detection means (3) has a threshold switch.

13. The machine operating element according to one of claims 1 to 12, **characterized in that** an electric energy reservoir or a connector for an electric energy reservoir is arranged on the support structure (2).

14. The machine operating element according to one of claims 1 to 13, **characterized in that** the first and second communication connection (8) are established via a joint communication medium (13).

15. The machine operating element according to one of claims 1 to 14, **characterized in that** the second communication connection (8) is configured for transmitting energy to the control variable detection means (4).

## Revendications

1. Élément de commande de machine (1) avec fonctionnalité de sécurité, comprenant un moyen de mesure de grandeurs caractéristiques de sécurité (3) sur une structure porteuse (2),
dans lequel la structure porteuse (2) est disposée dans ou sur un vêtement, ce vêtement pouvant être disposé sur une partie du corps effectuant des manipulations de commande de la machine et dans lequel le vêtement est un gant (10) et
dans lequel, entre le moyen de mesure de grandeurs caractéristiques de sécurité (3) et un circuit de sécurité (5) d'une machine-outil (6) à contrôler, il existe une première liaison de communication (7),
**caractérisé en ce que**
le moyen de mesure de grandeurs caractéristiques de sécurité (3) comprend un capteur de pression hydraulique (11) et un capteur de pression hydraulique (12) relié avec celui-ci et
sur la structure porteuse (2) est disposé en outre un moyen de mesure de grandeurs de réglage (4),
dans lequel, entre le moyen de mesure de grandeurs de réglage (4) et un module de commande (9) de la machine-outil (6), il existe une deuxième liaison de communication (8), cette deuxième liaison de communication (8) étant séparée de la première liaison de communication (7).

2. Élément de commande de machine selon la revendication 1, **caractérisé en ce que** le capteur de pression hydraulique (11) est conçu comme un circuit hydraulique.

3. Élément de commande de machine selon la revendication 2, **caractérisé en ce que**, dans le circuit hydraulique, est disposé un moyen de convoyage (19).

4. Élément de commande de machine selon la revendication 1, **caractérisé en ce que** le capteur de pression hydraulique (11) est conçu comme un ajutage hydraulique.

5. Élément de commande de machine selon la revendication 1 ou la revendication 4, **caractérisé en ce que** le capteur de pression (11) est disposé au niveau du côté supérieur du gant (10).

6. Élément de commande de machine selon la revendication 5, **caractérisé en ce que** le moyen de mesure de grandeurs caractéristiques de sécurité (3) est disposé au niveau d'au moins un doigt.

7. Élément de commande de machine selon l'une des revendications 1 à 6, **caractérisé en ce que** le capteur de pression hydraulique (11) constitue également le moyen de mesure de grandeurs de réglage (4).

8. Élément de commande de machine selon l'une des revendications 1 à 7, **caractérisé en ce que** la structure porteuse (2) est conçue comme une partie de recouvrement.

9. Élément de commande de machine selon l'une des revendications 1 à 8, **caractérisé en ce que**, sur la structure porteuse (2), est disposée une électronique d'analyse (14) qui est conçue pour la conversion des grandeurs caractéristiques de sécurité mesurées et/ou des grandeurs de réglage mesurées.

10. Élément de commande de machine selon la revendication 9, **caractérisé en ce que** l'électronique d'analyse (14) comprend un commutateur à valeur seuil.

11. Élément de commande de machine selon la revendication 9 ou 10, **caractérisé en ce que** l'électronique d'analyse (14) est conçue comme un circuit électronique imprimé.

12. Élément de commande de machine selon l'une des revendications 1 à 11, **caractérisé en ce que** le moyen de mesure de grandeurs caractéristiques de sécurité (3) comprend un commutateur à valeur seuil.

13. Élément de commande de machine selon l'une des revendications 1 à 12, **caractérisé en ce que**, sur la structure porteuse (2), est disposé un accumulateur d'énergie électrique ou un raccordement pour un accumulateur d'énergie électrique.

14. Élément de commande de machine selon l'une des revendications 1 à 13, **caractérisé en ce que** les première et deuxième liaisons de communication (8) sont établies par l'intermédiaire d'un moyen de communication commun (13).

15. Élément de commande de machine selon l'une des revendications 1 à 14, **caractérisé en ce que** la deuxième liaison de communication (8) est conçue pour la transmission d'énergie vers le moyen de mesure de grandeurs de réglage (4).
